# EUROPEAN PATENT APPLICATION

(11) **EP 2 962 904 A1**
(43) Date of publication of application: **06.01.2016**
(21) Application number: 13876415.4
(22) Date of filing: 07.11.2013
(51) Int. Cl.: B60R 21/38, B62D 25/12, B62D 25/10, B60R 21/34

(54) **GUNPOWDER TYPE HOOD LIFTING MODULE FOR PROTECTING PEDESTRIANS AND VEHICLE USING SAME**

(30) Priority: 28.02.2013 KR 20130022508
(71) Applicant: ITOPS Automotive Co., Ltd., Uiwang-si, Gyeonggi-do 437-718 (KR)
(72) Inventor: KIM, Goohyun, Yongin-si Gyeonggi-do 448-791 (KR); LEE, Daeyeop, Gwangmyeong-si Gyeonggi-do 423-050 (KR); PARK, Sangpeel, Gunpo-si Gyeonggi-do 435-010 (KR); JANG, Jaechul, Uiwang-si Gyeonggi-do 437-719 (KR)
(74) Representative: De Pablos Riba, Juan Ramon
(86) International application number: PCT/KR2013/010059
(87) International publication number: WO 2014/133242

(57) **Abstract**

Disclosed is an explosion-type hood lifting module for pedestrian protection, which includes a cylinder having a hollow inside and a hooking protrusion formed at an upper portion thereof to protrude inwards, a sealing unit formed at an inner side of the cylinder, an explosive unit coupled to a lower portion of the cylinder to explode by an external electric stimulation, a rod coupled to the cylinder by guidance and having an outer side closely adhered to the sealing unit, the rod having a stopper protruding at a lower portion thereof so that the stopper is hooked by the hooking protrusion to prevent the rod from deviating from the cylinder, and a gas exhausting unit formed at a lower portion of the rod to be exposed out when the rod protrudes to the maximum, thereby forming a passage through which a gas in the cylinder is exhausted out.

## Description

### TECHNICAL FIELD

The present disclosure relates to a hood lifting module for lifting a hood by an explosive force, and a vehicle using the same.

### BACKGROUND ART

In an existing technique, the safety of a vehicle is focused mainly on a driver. Accordingly, a vehicle structure as well as an air-bag system has been studied to give a minimum injury to a driver in collision.

However, a driver becomes a pedestrian if he moves out of a vehicle. In other words, anyone can be a driver or a pedestrian. Accordingly, in advanced countries, vehicle structures and safety systems for the safety of pedestrians are being actively studied, and in some countries, various taxation supports such as insurance premium exemption are given to vehicles having such a pedestrian safety function.

When a vehicle collides with a pedestrian, if a distance between a hood and various mechanical components (an engine or the like) below the hood is 10 cm or more, even though the head of the pedestrian collides with the hood, the hood absorbs the impact. However, if a distance between the hood and the mechanical components is not sufficient, the pedestrian collides with the mechanical components below the hood again after colliding with the hood.

However, since refined and sporty vehicles designs are more preferred, it is not easy to ensure a distance of 10 cm or more between a hood and mechanical components below the hood.

In this consideration, a system for operating an actuator located below the hood when a vehicle collides with a pedestrian, in order to forcibly lift the hood by 10 cm or more is applied to a vehicle. This system is called an "active hood system". Korean Patent Application No. 10-2006-0117604, Korean Patent Application No. 10-2006-0079262 or the like disclose such an active hood system.

An existing active hood system is operated using a spring, but a spring used for lifting a hood is heavy and expensive.

### DISCLOSURE

### Technical Problem

The present disclosure is directed to providing an explosion-type hood lifting module for pedestrian protection, which may lift a hood of a vehicle by instant explosion when an impact is sensed.

In addition, the present disclosure is directed to providing an explosion-type hood lifting module for pedestrian protection, which may give a suitable damping function against an external impact by partially discharging a high-pressure gas existing in a cylinder, after an explosive is exploded.

Moreover, the present disclosure is directed to providing a vehicle using the explosion-type hood lifting module for pedestrian protection.

### Technical Solution

In one aspect of the present disclosure, there is provided an explosion-type hood lifting module for pedestrian protection, which includes:
a cylinder having a hollow inside and a hooking protrusion formed at an upper portion thereof to protrude inwards;
a sealing unit formed at an inner side of the cylinder;
an explosive unit coupled to a lower portion of the cylinder to explode by an external electric stimulation;
a rod coupled to the cylinder by guidance and having an outer side closely adhered to the sealing unit, the rod having a stopper protruding at a lower portion thereof so that the stopper is hooked by the hooking protrusion to prevent the rod from deviating from the cylinder; and
a gas exhausting unit formed at a lower portion of the rod to be exposed out when the rod protrudes to the maximum, thereby forming a passage through which a gas in the cylinder is exhausted out.

In addition,
the rod may have a hollow inside, and
the gas exhausting unit may be a hole formed in the rod.

In addition,
the gas exhausting unit may be formed at an outer portion of the rod and be an elongated groove longer than a thickness of the sealing unit.

In another aspect of the present disclosure, there is also provided a vehicle, which includes a hood and an explosion-type hood lifting module for pedestrian protection coupled below the hood,
wherein the explosion-type hood lifting module for pedestrian protection includes:
a cylinder having a hollow inside and a hooking protrusion formed at an upper portion thereof to protrude inwards;
a sealing unit formed at an inner side of the cylinder;
an explosive unit coupled to a lower portion of the cylinder to explode by an external electric stimulation;
a rod coupled to the cylinder by guidance and having an outer side closely adhered to the sealing unit, the rod having a stopper protruding at a lower portion thereof so that the stopper is hooked by the hooking protrusion to prevent the rod from deviating from the cylinder; and
a gas exhausting unit formed at a lower portion of the rod to be exposed out when the rod protrudes to the maximum, thereby forming a passage through which a gas in the cylinder is exhausted out.

In addition,
the rod may have a hollow inside, and
the gas exhausting unit may be a hole formed in the rod.

In addition,
the gas exhausting unit may be formed at an outer portion of the rod and be an elongated groove longer than a thickness of the sealing unit.

In addition,
an impact sensor electrically connected to the explosive unit may be further combined to the vehicle.

### Advantageous Effects

The present disclosure provides an explosion-type hood lifting module for pedestrian protection, which may lift a hood of a vehicle by instant explosion when an impact is sensed.

In addition, the present disclosure provides an explosion-type hood lifting module for pedestrian protection, which may give a suitable damping function against an external impact by partially discharging a high-pressure gas existing in a cylinder, after an explosive is exploded.

Moreover, the present disclosure provides a vehicle using the explosion-type hood lifting module for pedestrian protection.

### DESCRIPTION OF DRAWINGS

Fig. 1 is a partial perspective view showing a vehicle according to the first embodiment of the present disclosure.
Fig. 2 is a perspective view showing an explosion-type hood lifting module for pedestrian protection according to the first embodiment of the present disclosure (where a rod does not protrude).
Fig. 3 a perspective view showing the explosion-type hood lifting module for pedestrian protection according to the first embodiment of the present disclosure (where the rod protrudes).
Fig. 4 is a cross-sectional view showing the explosion-type hood lifting module for pedestrian protection according to the first embodiment of the present disclosure (where the rod does not protrude).
Fig. 5 is a cross-sectional view showing the explosion-type hood lifting module for pedestrian protection according to the first embodiment of the present disclosure (where the rod protrudes).
Fig. 6 is a cross-sectional view and a partial enlarged view showing the explosion-type hood lifting module for pedestrian protection according to the first embodiment of the present disclosure (where the rod is partially inserted due to a load after an explosive is exploded).
Fig. 7 is a front view showing a rod according to the second embodiment of the present disclosure.
Fig. 8 is a cross-sectional view showing an explosion-type hood lifting module for pedestrian protection according to the second embodiment of the present disclosure (where a rod protrudes).
Fig. 9 is a front view showing a rod according to the third embodiment of the present disclosure.
Fig. 10 is a partial sectioned view showing an explosion-type hood lifting module for pedestrian protection according to the third embodiment of the present disclosure.

### BEST MODE

The present disclosure provides an explosion-type hood lifting module for pedestrian protection, which includes:
a cylinder having a hollow inside and a hooking protrusion formed at an upper portion thereof to protrude inwards;
a sealing unit formed at an inner side of the cylinder;
an explosive unit coupled to a lower portion of the cylinder to explode by an external electric stimulation;
a rod coupled to the cylinder by guidance and having an outer side closely adhered to the sealing unit, the rod having a stopper protruding at a lower portion thereof so that the stopper is hooked by the hooking protrusion to prevent the rod from deviating from the cylinder; and
a gas exhausting unit formed at a lower portion of the rod to be exposed out when the rod protrudes to the maximum, thereby forming a passage through which a gas in the cylinder is exhausted out.

### MODE FOR DISCLOSURE

Hereinafter, preferred embodiments of the present disclosure will be described in detail with reference to the accompanying drawings. These embodiments are just for illustrations for a person having ordinary skill in the art to easily implement the present disclosure, but this does not mean that the feature and scope of the present disclosure are limited to these embodiments.

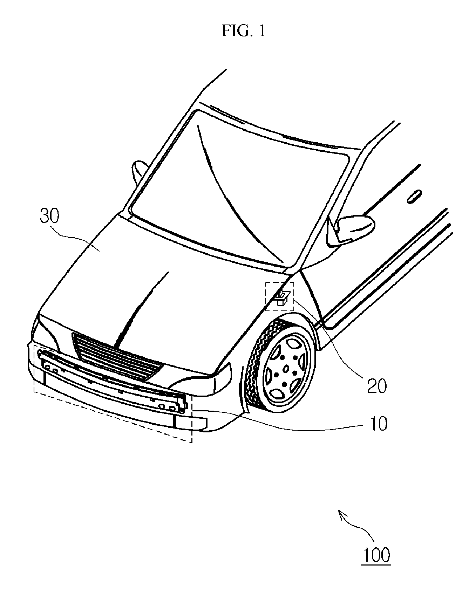

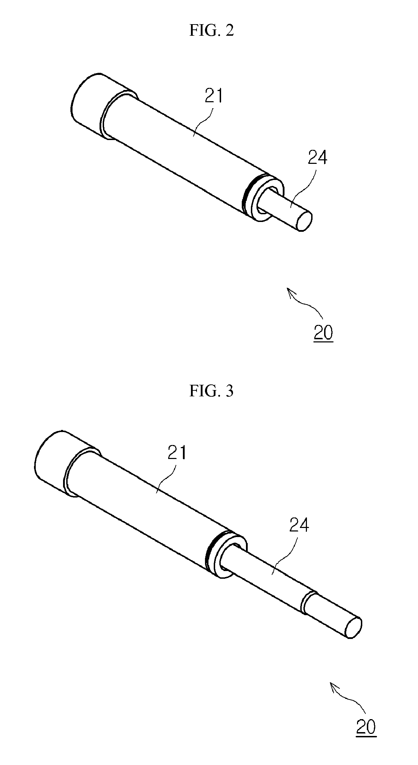

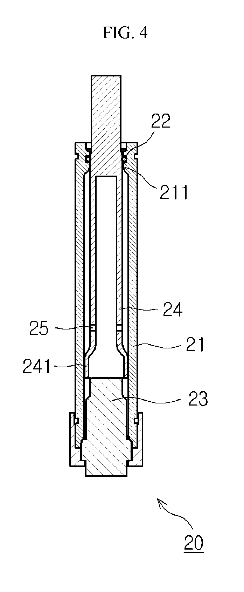

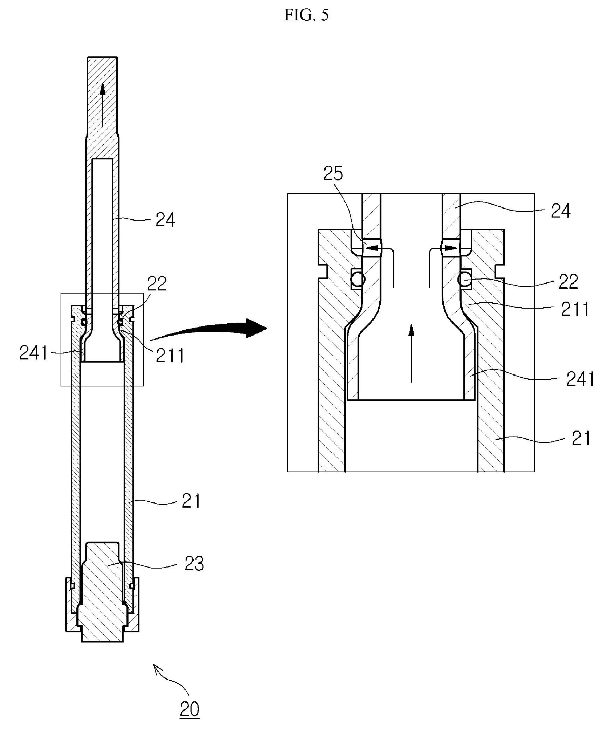

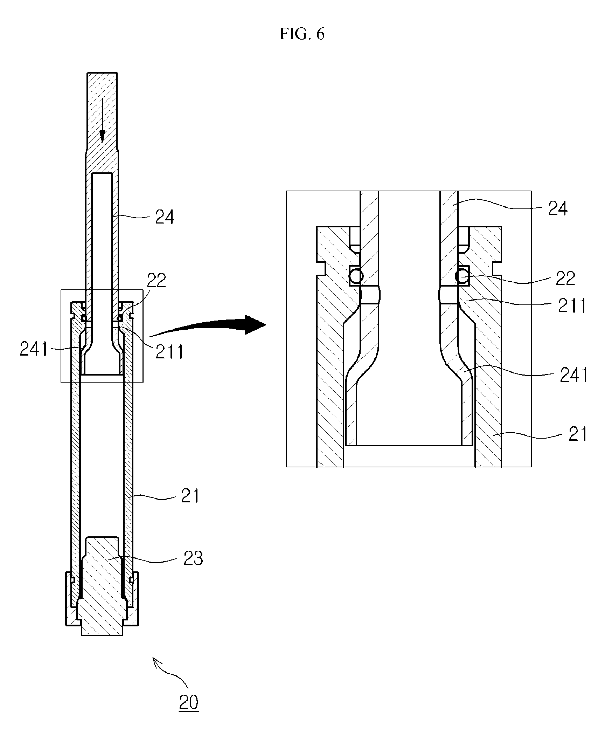

Fig. 1 is a partial perspective view showing a vehicle according to the first embodiment of the present disclosure, Fig. 2 is a perspective view showing an explosion-type hood lifting module for pedestrian protection according to the first embodiment of the present disclosure (where a rod does not protrude), Fig. 3 a perspective view showing the explosion-type hood lifting module for pedestrian protection according to the first embodiment of the present disclosure (where the rod protrudes), Fig. 4 is a cross-sectional view showing the explosion-type hood lifting module for pedestrian protection according to the first embodiment of the present disclosure (where the rod does not protrude), Fig. 5 is a cross-sectional view showing the explosion-type hood lifting module for pedestrian protection according to the first embodiment of the present disclosure (where the rod protrudes), and Fig. 6 is a cross-sectional view and a partial enlarged view showing the explosion-type hood lifting module for pedestrian protection according to the first embodiment of the present disclosure (where the rod is partially inserted due to a load after an explosive is exploded).

A vehicle 100 of this embodiment includes an explosion-type hood lifting module 20 for pedestrian protection, which is coupled below a hood 30. Here, if an impact sensor 10 senses a collision with a pedestrian, the explosion-type hood lifting module 20 pedestrian protection lifts up the hood 30 by about 10 cm. Therefore, even though the pedestrian collides with the hood 30, the hood 30 may absorb the impact.

The impact sensor 10 may be a switch operated by a physical contact or an acceleration sensor.

The vehicle 100 of this embodiment has essential technical features in the explosion-type hood lifting module 20 for pedestrian protection, and thus features of the explosion-type hood lifting module 20 for pedestrian protection will be described in detail. If an explosive is exploded, the explosion-type hood lifting module 20 for pedestrian protection according to this embodiment instantly lifts up a rod 24. If the rod 24 is lifted up to the end, a gas exhausting unit 25 is exposed. A high-pressure gas in a cylinder 21 is partially exhausted out through the gas exhausting unit 25. After that, if the pressure in the cylinder 21 is lowered, the rod 24 is partially inserted into the cylinder 21 due to a weight of the hood 30, and the gas exhausting unit 25 moves into the cylinder 21. After that, a suitable cushion is maintained without exhausting gas further, and thus the cylinder 21 and the rod 24 give a damping function.

The explosion-type hood lifting module 20 for pedestrian protection includes a cylinder 21 having a hollow inside and a hooking protrusion 211 formed at an upper portion thereof to protrude inwards; a sealing unit 22 formed at an inner side of the cylinder 21; an explosive unit 23 coupled to a lower portion of the cylinder 21 to explode by an external electric stimulation; a rod 24 coupled to the cylinder 21 by guidance and having an outer side closely adhered to the sealing unit 22, the rod having a stopper 241 protruding at a lower portion thereof so that the stopper 241 is hooked by the hooking protrusion 211 to prevent the rod 24 from deviating from the cylinder 21; and a gas exhausting unit 25 formed at a lower portion of the rod 24 to be exposed out when the rod 24 protrudes to the maximum, thereby forming a passage through which a gas in the cylinder 21 is exhausted out.

The cylinder 21 has a hollow inside. The hooking protrusion 211 protruding inwards is formed at the upper portion of the cylinder 21. The hooking protrusion 221 is shaped so that the stopper 241 of the rod 24 is hooked thereto. If a high-pressure explosive is instantly exploded, the rod 24 is lifted up. Here, the rod 24 does not deviate from the cylinder 21 by means of the rod 24 and the stopper 241.

In addition, the sealing unit 22 is formed at the upper portion of the cylinder 21. The sealing unit 22 is closely adhered to the outer side of the rod 24. The sealing unit 22 is made of an O-ring to block movement of gas in the cylinder 21.

The explosive unit 23 is coupled to the lower portion of the cylinder 21. If an electric stimulation is transferred to the explosive unit 23, an explosive of the explosive unit 23 is exploded to generate a high-pressure gas. The pressure of the gas lifts up the rod 24.

The rod 24 is coupled to the cylinder 21 by guidance. The outer side of the rod 24 is closely adhered to the sealing unit 22. The stopper 241 is formed at the lower portion of the rod 24 to protrude outwards. If the rod 24 protrudes outwards since the explosive is exploded, the stopper 241 of the rod 24 is hooked by the hooking protrusion 211 in the cylinder 21 and does not deviate from the cylinder 21.

The gas exhausting unit 25 is formed at the lower portion of the rod 24. If the rod 24 protrudes to the maximum from the cylinder 21, the gas exhausting unit 25 is exposed out. At this time, the gas in the cylinder 21 (generated by explosion of the explosive) may be exhausted out through the gas exhausting unit 25 (see Fig. 5).

As shown in Fig. 4, at ordinary time, the rod 24 is inserted into the cylinder 21, and its upper portion is partially exposed. However, if the explosive unit 23 is exploded due to an external impact, a high-pressure gas is generated, and the high-pressure gas lifts up the rod 24 as shown in Fig. 5. As the rod 24 protrudes upwards, the hood 30 of Fig. 1 is also lifted up.

As in the enlarged cross-sectional view of Fig. 5, the gas exhausting unit 25 having a hole shape is formed in the hollow rod 24. If the rod 24 is lifted up to the end due to high-pressure gas, the gas in the cylinder 21 is exhausted out through the gas exhausting unit 25. Therefore, the gas pressure in the cylinder 21 is lowered. Depending on the size of the gas exhausting unit 25, the amount of exhausted gas changes.

After that, as shown in Fig. 6, the rod 24 is pushed into the cylinder 21 due to a weight of the hood 30. At this time, since the gas exhausting unit 25 enters into the cylinder 21, gas is not leaked any more. If a suitable amount of gas is exhausted out, remaining gas keeps a suitable pressure and gives a damping function when the rod 24 is pushed into the cylinder 21.

If the gas exhausting unit 25 is not provided, a high-pressure gas generated at explosion of the explosive remains in the cylinder, and thus even though an external impact is transferred to the rod 24, the rod 24 is not pushed into the cylinder 21. In other words, the rod 24 becomes too hard to give a damping function. However, in the explosion-type hood lifting module 20 for pedestrian protection according to this embodiment, the rod 24 is lifted up by using a high-pressure gas generated when the explosive is exploded, thereby lifting up the hood 30, and also the gas in the cylinder 21 is suitably exhausted through the gas exhausting unit 25 so that the rod 24 may have a suitable buffering force to absorb an external force later.

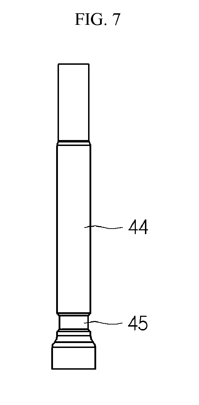

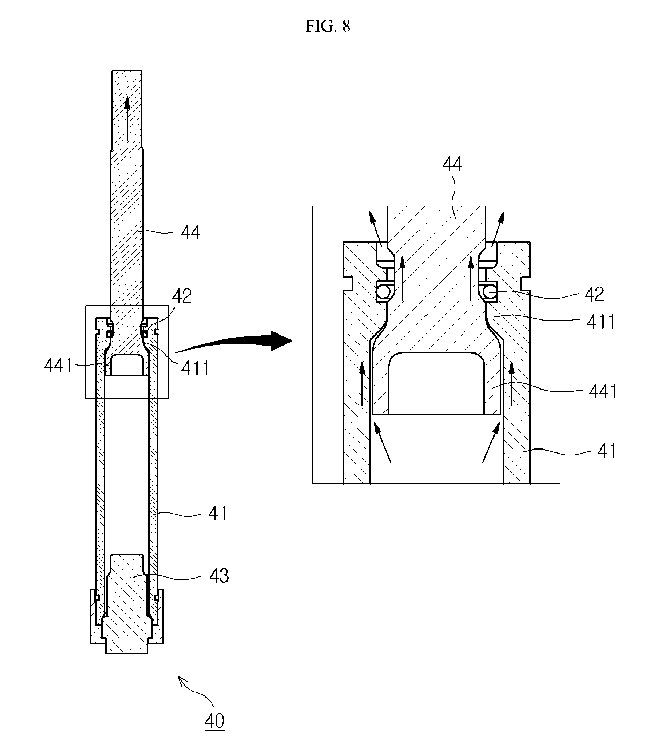

Fig. 7 is a front view showing a rod according to the second embodiment of the present disclosure, and Fig. 8 is a cross-sectional view showing an explosion-type hood lifting module for pedestrian protection according to the second embodiment of the present disclosure. In this embodiment, a gas exhausting unit 45 formed at a rod 44 has a structure different from that of the first embodiment. Thus, hereinafter, the structure of the gas exhausting unit 45 will be described in detail.

The gas exhausting unit 45 of this embodiment has a stepped structure at which a groove may be formed, as shown in Fig. 7. In Fig. 7, if the rod 44 having the gas exhausting unit 45 with a groove shape is lifted up to the most in the cylinder 41, the gas exhausting unit 45 has the same height as a sealing unit 42. The gas exhausting unit 45 having a stepped groove form is elongated in the length direction of the rod 44 with a length greater than a thickness of the sealing unit 42. Therefore, if the sealing unit 42 is located at the same height as the gas exhausting unit 45, the gas exhausting unit 45 is not entirely covered, and the gas in the cylinder 41 is leaked out.

If the gas exhausting unit 45 and the sealing unit 42 are located at the same height as shown in Fig. 8, the sealing unit 42 is not able to block the gas exhausting unit 45 with a stepped groove. Therefore, the gas in the cylinder 41 moves along an outer wall of the rod 44 and an inner wall of the cylinder 41 and is then exhausted through the gas exhausting unit 45. After that, if the pressure of the gas in the cylinder 41 is lowered and the rod 44 descends due to a weight of the hood 30, the outer wall of the rod 44 comes into contact with the sealing unit 42 and is sealed again. If the rod 44 moves down into the cylinder 41, the gas exhausting unit 45 with a stepped groove is not exposed out.

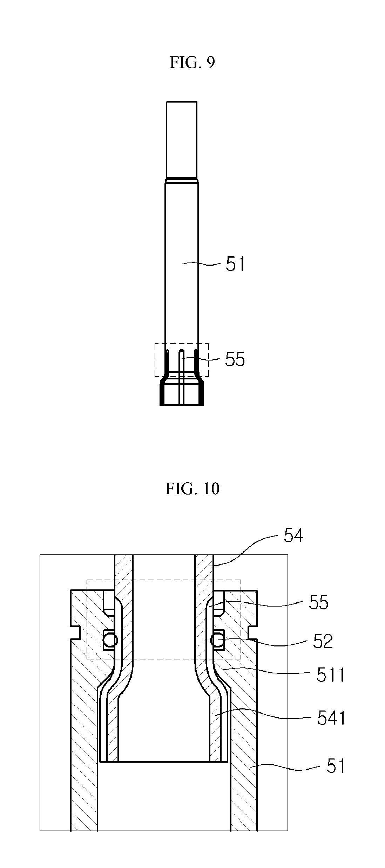

Fig. 9 is a front view showing a rod according to the third embodiment of the present disclosure, and Fig. 10 is a partial sectioned view showing an explosion-type hood lifting module for pedestrian protection according to the third embodiment of the present disclosure. In this embodiment, a gas exhausting unit 55 formed at a rod 54 has a structure different from that of the first embodiment. Thus, hereinafter, the structure of the gas exhausting unit 55 will be described in detail.

The gas exhausting unit 55 of this embodiment has a groove shape as shown in Fig. 9. In Fig. 9, if the rod 54 having the gas exhausting unit 55 with a groove shape is lifted up to the most in the cylinder 51, the gas exhausting unit 55 has the same height as the sealing unit 52. The gas exhausting unit 55 with a groove shape is elongated in the length direction of the rod 54 with a length greater than a thickness of the sealing unit 52. Therefore, if the sealing unit 52 is located at the same height as the gas exhausting unit 55, the gas exhausting unit 55 is not entirely covered, and the gas in the cylinder 51 is leaked out.

If the sealing unit 52 and the gas exhausting unit 55 are located at the same height, the gas exhausting unit 55 is partially exposed out, and the sealing unit 52 is not closely adhered to a side surface of the rod 54 due to the gas exhausting unit 55 with a groove shape. For this reason, the gas in the cylinder 51 is not blocked. Therefore, the gas in the cylinder 51 moves along an outer wall of the rod 54 and an inner wall of the cylinder 51 and is then exhausted out through the gas exhausting unit 55. After that, the pressure of the gas in the cylinder 51 is lowered and the rod 54 descends due to a weight of the hood 30, the outer wall of the rod 54 comes into contact with the sealing unit 52 and is sealed again. If the rod 54 moves down into the cylinder 51, the gas exhausting unit 55 with a groove shape is not exposed out.

The embodiments of the present disclosure have been described in detail. However, the embodiments are just for illustrations and not intended to limit the scope of the appended claims. Many changes, modifications and equivalents can be made thereto by those having ordinary skill in the art. Such changes, modifications and equivalents also fall within the scope of the present disclosure.

The present disclosure may be utilized as a component in the vehicle industries.

## Claims

1. An explosion-type hood lifting module for pedestrian protection, comprising:
a cylinder having a hollow inside and a hooking protrusion formed at an upper portion thereof to protrude inwards;
a sealing unit formed at an inner side of the cylinder;
an explosive unit coupled to a lower portion of the cylinder to explode by an external electric stimulation;
a rod coupled to the cylinder by guidance and having an outer side closely adhered to the sealing unit, the rod having a stopper protruding at a lower portion thereof so that the stopper is hooked by the hooking protrusion to prevent the rod from deviating from the cylinder; and
a gas exhausting unit formed at a lower portion of the rod to be exposed out when the rod protrudes to the maximum, thereby forming a passage through which a gas in the cylinder is exhausted out.

2. The explosion-type hood lifting module for pedestrian protection according to claim 1,
wherein the rod has a hollow inside, and
wherein the gas exhausting unit is a hole formed in the rod.

3. The explosion-type hood lifting module for pedestrian protection according to claim 1,
wherein the gas exhausting unit is formed at an outer portion of the rod and is an elongated groove longer than a thickness of the sealing unit.

4. A vehicle, comprising:
a hood; and
an explosion-type hood lifting module for pedestrian protection coupled below the hood,
wherein the explosion-type hood lifting module for pedestrian protection includes:
a cylinder having a hollow inside and a hooking protrusion formed at an upper portion thereof to protrude inwards;
a sealing unit formed at an inner side of the cylinder;
an explosive unit coupled to a lower portion of the cylinder to explode by an external electric stimulation;
a rod coupled to the cylinder by guidance and having an outer side closely adhered to the sealing unit, the rod having a stopper protruding at a lower portion thereof so that the stopper is hooked by the hooking protrusion to prevent the rod from deviating from the cylinder; and
a gas exhausting unit formed at a lower portion of the rod to be exposed out when the rod protrudes to the maximum, thereby forming a passage through which a gas in the cylinder is exhausted out.

5. The vehicle according to claim 4,
wherein the rod has a hollow inside, and
wherein the gas exhausting unit is a hole formed in the rod.

6. The vehicle according to claim 4,
wherein the gas exhausting unit is formed at an outer portion of the rod and is an elongated groove longer than a thickness of the sealing unit.

7. The vehicle according to claim 5 or 6,
wherein an impact sensor electrically connected to the explosive unit is further combined to the vehicle.
